(19) Europäisches Patentamt
European Patent Office
Office européen des brevets

(11) EP 0 905 192 B1

(12) **EUROPÄISCHE PATENTSCHRIFT**

(45) Veröffentlichungstag und Bekanntmachung des Hinweises auf die Patenterteilung:
**14.09.2005 Patentblatt 2005/37**

(51) Int Cl.[7]: **C08L 67/03**, C08L 81/04, C08G 75/02

(21) Anmeldenummer: **98117889.0**

(22) Anmeldetag: **21.09.1998**

(54) **Synthese von Copolymeren aus einem Polyarylensulfid und einem aromatischen Polyester sowie deren Verwendung zur Kompatilisierung von Blends**

Synthesis of copolymers from a polyarylensulfide and an aromatic polyester, and their use as blend compatibilizers

Synthése de copolyméres d'un polysulfure d'arylene et d'un polyester aromatique, ainsi que leur emploi comme agent de compatibilité de mélanges

(84) Benannte Vertragsstaaten:
**DE FR GB IT**

(30) Priorität: **24.09.1997 DE 19742057**

(43) Veröffentlichungstag der Anmeldung:
**31.03.1999 Patentblatt 1999/13**

(73) Patentinhaber: **Ticona GmbH
65451 Kelsterbach (DE)**

(72) Erfinder:
- **Haubs, Michael, Dr.
55545 Bad Kreuznach (DE)**
- **Schneller, Arnold, Dr.
64409 Messel (DE)**
- **Böhme, Frank, Dr.
01705 Pesterwitz (DE)**
- **Kappler, Dennis, DI.
01309 Dresden (DE)**
- **Pospiech, Doris, Dr.
01097 Dresden (DE)**

(56) Entgegenhaltungen:
**EP-A- 0 044 184**
**EP-A- 0 432 561**
**EP-A- 0 732 369**
**US-A- 5 182 334**

- **GOPAKUMAR T G ET AL: "In situ compatibilisation of poly(phenylene sulphide)/wholly aromatic thermotropic liquid crystalline polymer blends by reactive extrusion: morphology, thermal and mechanical properties" POLYMER, Bd. 40, Nr. 2, Januar 1999, Seite 357-364 XP004139676**
- **CHEMICAL ABSTRACTS, vol. 128, no. 26, 29. Juni 1998 Columbus, Ohio, US; abstract no. 322331, GOPAKUMAR T G ET AL.: "Reactive blending of poly(phenylene sulfide)/wholly aromatic thermotropic liquid crystalline polymer blends" XP002088776 & MACROMOL NEW FRONT, PROC. IUPAC INT. SYMP. ADV. POLYM. SCI. TECHNOL., Bd. 2, 1998, Seiten 761-764,**
- **JUKKA SEPPALA ET AL: "INJECTION-MOULDED BLENDS OF A THERMOTROPIC LIQUID CRYSTALLINE POLYMER WITH POLYETHYLENE TEREPHTHALATE, POLYPROPYLENE, AND POLYPHENYLENE SULFIDE" JOURNAL OF APPLIED POLYMER SCIENCE, Bd. 44, Nr. 6, 25. Februar 1992, Seiten 1051-1060, XP000273119**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Synthese von Copolymeren aus einem Polyarylensulfid und einem aromatischen Polyester sowie deren Verwendung zur Kompatibilisierung von Blends, insbesondere Blends aus Polyarylensulfiden und flüssigkristallinen Polyestern.

Polyphenylensulfid (PPS, wie z. B. Fortron®) und flüssigkristalline Polyester (Vectra®) (eingetragene Marke der Fa. Hoechst) sind Hochleistungspolymere, die in der Technik vielfältige Anwendungen finden. Sie sind thermisch, chemisch und mechanisch hoch belastbar.

Eine Besonderheit des flüssigkristallinen Vectra®'s ist seine anisotrope Struktur. Dadurch ist das Polymer in der Lage, starke mechanische Belastungen in Kettenlängsrichtung aufzunehmen. Außerdem eignet sich Vectra® aufgrund seiner sehr guten Fließfähigkeit für den Präzisionsspritzguß. Ein Nachteil sind die hohen Herstellungskosten.

PPS (Fortron®) zeichnet sich besonders aus durch seine chemische und thermische Resistenz, seine niedrige thermische und elektrische Leitfähigkeit und seine niedrige Schmeizviskosität. Vorteilhaft ist auch der für ein Hochleistungspolymer vergleichbar niedrige Preis.

Mischungen aus Hochleistungspolymeren mit anderen temperaturbeständigen Polymeren sind bekannt. Auch sind Mischungen von PPS mit Vectra® bekannt. Ein Vorteil solcher Mischungen besteht darin, die in einigen Anwendungsfällen unerwünschte Anisotropie des flüssigkristallinen Polymers zu verhindern. Darüber hinaus ist beispielsweise eine Mischung aus Vectra® und PPS kostengünstiger als reines Vectra®.

Beispiele für solche Mischungen aus PPS und Vectra® sind hinreichend aus der Literatur bekannt. So beschreiben G.D. Choi, W.H. Jo und H.G. Kim in J. Appl. Polym. Sci. 59, 443-452, 1996 beispielsweise die rheologischen, morphologischen und mechanischen Eigenschaften dieser Blends. Allerdings wird in dieser Veröffentlichung auch auf eine Unverträglichkeit der beiden Phasen hingewiesen.

Darüber hinaus wurde festgestellt, daß durch einfaches Mischen der Polymere weitere, gravierende Nachteile in Kauf genommen werden müssen. So sinkt zum Beispiel die Schlagzähigkeit von Vectra® beim Zumischen von PPS sehr stark ab.

Es ist bekannt, die mechanischen Eigenschaften der bekannten PPS/Vectra®-Blends durch eine Kompatibilisierung zu verbessern, meistens durch Zusatz spezieller Kompatibilisierungskomponenten.

So ist in der US-A-5 182 334 die Kompatibilisierung von PPS/Vectra® A910-Blends über eine Direktveresterung mit Borsäure/Phosphorsäure als Katalysator beschreiben. Dabei werden carbonsäureterminierte Polyester und thiolterminiertes PPS in Gegenwart eines Katalysators extrudiert.

Eine andere Möglichkeit der physikalischen Kompatibilisierung wurde von B.C. Kim, T.W. Son, S.M. Hong und K.U. Kim in Polym. *Prep. (Am. Chem. Soc., Div. Polym. Chem)* 34, 823-24, 1993 beschrieben, demnach Polysulfon (Udel® P-1700) in das Blendsystem PPS/Vectra® B950 eingebracht wird. Bei dem Polysulfon handelt es sich um ein amorphes Polymer, weiches im PPS/Vectra®-Blend verträglichkeitsvermittelnd wirkt.

Diese beiden Möglichkeiten der Kompatibilisierung von PPS/Vectra®-Blends haben aber den Nachteil, daß die mechanischen Eigenschaften nicht wesentlich verbessert werden.

Aufgabe der vorliegenden Erfindung ist die Bereitstellung eines geeigneten Copolymers, welches in der Lage ist, PPS/Vectra®-Blends zu kompatibilisieren.

Die Aufgabe wird gelöst durch ein Copolymer, enthaltend

a) ein Segment A mit einer zahlenmittleren Molmasse Mn zwischen 1.000 und 20.000 g/mol, das

i) Einheiten 1, die von Strukturen der Formel (I)

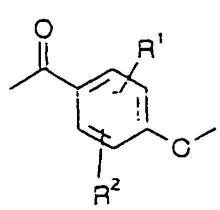

(I)

abgeleitet sind, wobei die Reste $R^1$ und $R^2$ unabhängig voneinander ein Wasserstoff-, Fluor- Chlor oder Bromatom oder einen verzweigten oder unverzweigten Alkyl- oder Alkoxyrest mit 1 bis 6 Kohlenstoffatomen darstellen; und/oder

ii) Einheiten 2, die von Strukturen der Formel (II)

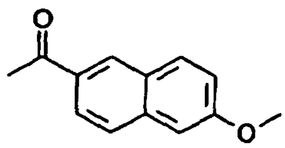

(II)

abgeleitet sind,

aufweist; und

b) ein Segment B, abgeleitet von einer Polarylensulfid-Struktur der Formel (IV) aufweist,

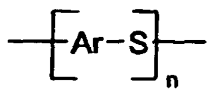

(IV)

wobei Ar einen aromatischen oder mehrere kondensierte, aromatische Reste und n eine Zahl zwischen 2 und 100, insbesondere zwischen 5 und 20, darstellt,

dadurch gekennzeichnet, dass die Segmente A und B über Esterbrücken verknüpft sind und ein Blockcopolymer bilden.

Die Einheit 1 ist p-Hydroxybenzoesäure oder eines ihrer Derivate, Einheit 2 besteht aus 2-Hydroxynaphthalin-6-carbonsäure.

In der Formel (IV) kann der Rest Ar einen Phenylen- oder Naphthylenrest darstellen. Gemäß einer besonders bevorzugten Ausführungsform der vorliegenden Erfindung ist das Segment B abgeleitet von Poly(m-thiophenylen), Poly(o-thiophenylen), insbesondere von Poly(p-thiophenylen) (PPS).

Die zahlenmittlere Molmasse Mn des Copolymers kann zwischen 3.000 und 3.000.000 g/mol, vorzugsweise zwischen 5.000 und 200.000 g/mol, insbesondere zwischen 10.000 und 100.000 g/mol liegen.

Entsprechend einer besonderen Ausführungsform der Erfindung weist das Segment A des Copolymers sowohl Einheiten 1 als auch Einheiten 2 auf.

Diese Einheiten 1 und 2 können im Segment A in statistischer Verteilung oder in alternierender Reihenfolge angeordnet sein. Bezüglich der Definition von "statistischer Verteilung" oder "alternierender Reihenfolge" sei auf H.-G. Elias, "Makromoleküle" Band 1, Hüthig & Wepf Verlag Basel 1990, S. 32-34, verwiesen.

Das molare Verhältnis von Einheiten 1 zu Einheiten 2 im Segment A kann bei den erfindungsgemäßen Copolymeren zwischen 1 : 9 und 9 : 1 liegen.

In einer weiteren, erfindungsgemäßen Ausführungsform weist das Segment A des Copolymers zusätzlich 0,5 bis 10 mol% Einheiten 3 aufweist, die von Strukturen der Formel (III)

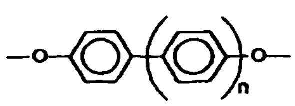

(III)

abgeleitet sind, wobei n die Zahl 0 oder 1 darstellt. Solche Einheiten 3 sind entweder von Hydrochinon (n = 0) oder 4,4'-Dihydroxydiphenyl (n = 1) abgeleitet. Diese Einheit 3 hat die Funktion eines Kettenreglers. Entsprechend der eingebauten Menge der Einheit 3 besitzt Block A eine mittlere Molmasse, ausgedrückt als Zahlenmittel Mn, von etwa 1.000 bis 20.000 g/mol, vorzugsweise 2.000 bis 10.000 g/mol.

Bei den zuvor beschriebenen erfindungsgemäßen Copolymeren kann der Anteil an Segment A zwischen 5 und 95 Gew.-% betragen. Die jeweiligen Segmente A und B können in einer weiteren, erfindungsgemäßen Ausführungsform auch ein Copolymer entsprechend der Struktur (I)

----ABABAB--- (Struktur I)

in dem die Segmente A und B alternierend angeordnet sind, oder ein Copolymer mit der festen Segmentabfolge

A-B-A (Struktur II)

bilden. In letzterem Fall enthält das Segment A dieses speziellen Triblockcopolymers keine Einheit 3.

In den erfindungsgemäßen Copolymeren sind die Segmente A und B über Esterbrücken in folgender Weise miteinander verknüpft: A-O-CO-B.

Die erfindungsgemäßen Copolymere können durch verschiedene Verfahren hergestellt werden, z. B. durch Kondensation bzw. Umesterung der vom Segment A abgeleiteten acetoxygruppenterminierten Oligo(4-oxybenzoat-co-2,6-oxynaphthoate) mit vom Segment B abgeleiteten carboxylgruppenterminierten PPS-Oligomeren. Alternativ können auch die reaktionsfähigen Derivate der carboxylgruppenterminierten PPS-Oligomere, z.B. deren Arylester, mit hydroxygruppenterminierten Oligo(4-oxybenzoat-co-2,6-oxynaphthoaten) umgesetzt werden.

Carboxylgruppenterminierte PPS-Oligomere lassen sich in Anlehnung nach einer Vorschrift von Heitz synthetisieren (Freund, L.; Heitz, W. *Makromol. Chem.* 191, 815-828, 1990), indem p-Dichlorbenzol bzw. m-Dichlorbenzol mit Natriumsulfid-Trihydrat zur Reaktion gebracht und nachfolgend mit p-Chlorbenzoesäure umgesetzt werden. Die Reaktion wird in einem polaren Lösungsmittel, wie N-Methylpyrollidon oder N-Methylcaprolactam bei Temperaturen von 220-270 °C und Drücken von 8-12 bar in einem Autoklaven durchgeführt. Bei dieser Herstellungsvariante erreicht man Umsätze um 95 % nach einer Reaktionszeit von 8-12 Stunden.

Die Molmassen Mn der funktionalisierten PPS-Oligomere liegen im Bereich von 500 bis 20.000 g/mol und werden durch Wahl des geeigneten Konzentrationsverhältnisses der Ausgangsstoffe eingestellt.

Acetoxyterminierte Oligo(4-oxybenzoat-co-2,6-oxynaphthoat)e werden durch Kondensation bzw. Umesterung der von den Einheiten 1 und 2 abgeleiteten Acetoxycarbonsäuren und der von Einheit 3 abgeleiteten Diacetoxyverbindungen und anschließender Polykondensation hergestellt, wobei sowohl die Acetoxycarbonsäuren als auch die Diacetoxyverbindung in situ aus den aus den Formeln 1 und 2 ableitbaren Hydroxycarbonsäuren und der aus der Formel 3 ableitbaren Dihydroxyverbindung hergestellt werden können. Die aus der Formel 3 abgeleiteten Diacetoxy- bzw. Dihydroxyverbindungen haben die Funktion eines Molmassenreglers und werden zu einem Anteil von 0 bis 10 mol% zugesetzt.

Ohne Zusatz des Molmassenreglers entsteht ein Polymer, welches an einem Kettenende mit einer Carboxylgruppe und am anderen Kettenende mit einer Acetoxygruppe terminiert ist. Dieses Polymer wird bei der Synthese von Blockcopolymeren des Typs (II) eingesetzt. Mit Zusatz des Molmassenreglers entsteht ein Polymer, weiches beidseitig mit Acetoxygruppen terminiert ist. Dieses Polymer wird bei der Synthese von Blockcopolymeren des Typ (I) eingesetzt.

Die Synthese der erfindungsgemäßen Copolymere wird vorzugsweise durch gemeinsames Aufschmelzen des carboxylgruppenterminierten PPS-Oligomers und des acetoxyterminierten Oligo(4-oxybenzoat-co-2,6-oxynaphthoat)es durchgeführt, wobei der Kettenaufbau über Umesterungsreaktionen und Abspaltung von Essigsäure erfolgt. Bei der Verwendung eines beidseitig acetoxyterminierten Oligo(4-oxybenzoat-co-2,6-oxynaphthoat)es entstehen Multiblockcopolymere der Struktur (I), während bei der Verwendung eines auf der einen Seite acetoxyterminierten und auf der anderen Seite carbonsäureterminierten Oligo(4-oxybenzoat-co-2,6-oxynaphthoat)es Triblockcopolymere der Struktur (II) entstehen.

Die Kondensations- und Umesterungsreaktionen können ebenso wie die Polymerisationsreaktionen durch Einsatz geeigneter Katalysatoren beschleunigt werden. Derartige Katalysatoren sind beispielsweise Magnesium, Titantetraisopropylat, Magnesiumacetat, Kaliumacetat, Cobaltacetat, Alkoxytitanate, Dibutylzinndilaurat oder Germaniumdioxid. Die Katalysatoren werden bevorzugt in Mengen von 0,001 bis 2 %, bezogen auf die Gesamtmasse der Ausgangsverbindungen, eingesetzt.

Die Herstellung der erfindungsgemäßen Copolymere erfolgt bei Temperaturen zwischen 250 und 400 °C, bevorzugt zwischen 280 und 350 °C. In der Regel ist es vorteilhaft, die Polymerisationsreaktionen durch das Anlegen von Vakuum zu beschleunigen.

Die Schmelztemperaturen der Copolymere liegen, abhängig von Polymerisationsgrad und Zusammensetzung im Bereich von 250 bis 380 °C, vorzugsweise bei 280 bis 340 °C.

Die Herstellung eines erfindungsgemäßen Copolymeren wird im folgenden erläutert: Das Copolymer wird aus einem funktionalisierten PPS-Oligomer und einem funktionalisierten Oligo(4-oxybenzoat-co-2,6-oxynaphthoat) hergestellt. Dabei kann für die gezielte Einstellung der Molmasse des flüssigkristallinen Polyesters ein Kettenregler (Einheit 3) eingesetzt werden. Eine mögliche Strukturformel für das Copolymer, welches aus carbonsäure- und acetoxyterminierten Oligomeren hergestellt wurde, ist in Anlage 1 dargestellt, wobei n, x, y und z die Anzahl der jeweiligen Einheiten darstellt. Dabei wurde Diphenyldiacetat (DPDA) als Kettenregler bei der Synthese des flüssigkristallinen Polyesters verwendet.

Die Synthese des Copolymers wird vorteilhaft in einem Schmelzkneter durchgeführt. Für Copolymere hoher Molmasse werden die funktionalisierten Blöcke A und B in äquimolaren Mengen eingesetzt. Wünscht man Copolymere

geringeren Polymerisationsgrades, stellt man dies durch die Stöchiometrie der Ausgangsverbindungen ein. Die Schmelzpolykondensation wird bei einer Temperatur von 280 bis 360 °C und unter vermindertem Druck über einen Zeitraum von 0,1 bis 8 Stunden durchgeführt. Der Fortgang der Reaktion läßt sich über die, Erhöhung des Drehmomentes verfolgen.

Das erfindungsgemäße Copolymer kann insbesondere zur Kompatibilisierung von Blends aus einem Polyarylensulfid und einem flüssigkristallinen Polyester verwendet werden.

Hierzu werden beispielsweise die kommerziell erhältlichen Produkte Vectra® und Fortron® mit dem Copolymer in der Schmelze gemischt, um einen kompatibilisierten PPS/Vectra®-Blend zu erhalten. Die Gewichtsverhältnisse von Vectra® und Fortron® können dabei von 1:9 bis 9:1 variieren. Der Anteil des synthetisierten Copolymers in dieser Mischung beträgt 0,5 bis 15 Gew.-%, vorzugsweise 1 bis 5 Gew.-%. Vorzugsweise enthält der kompatibilisierte Blend mindestens 50 Gew.-% Polyarylensulfid.

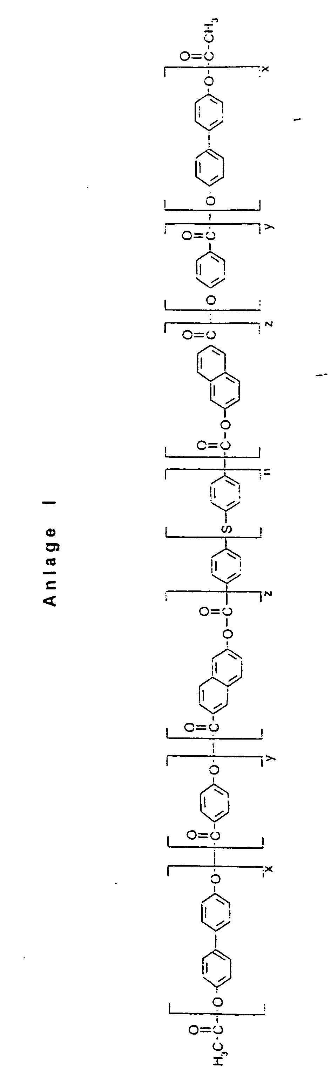

Die mit den erfindungsgemäßen Copolymeren kompatibilisierten Blends zeigen, wie in Abbildung 1 dargestellt, über den gesamten Konzentrationsbereich deutlich erhöhte Schlagzähigkeiten. Darüberhinaus zeigt sich völlig unerwartet auch eine deutlich erhöhte Schlagzähigkeit bei Zugabe des erfindungsgemäßen Copolymers zum reinem Vectra®. Mittels rasterelektronenmikroskopischer Aufnahmen kann die kompatibilisierende Wirkung des Copolymers optisch sichtbar gemacht werden. Es werden im kompatibilisierten Blend deutlich kleinere Domänen mit rauheren Phasengrenzflächen ausgemacht.

In einzelnen Fällen wird eine Verdopplung der Schlagzähigkeit bei diesen Blends erreicht, ohne daß eine Veränderung der anderen mechanischen Kennwerte eintritt.

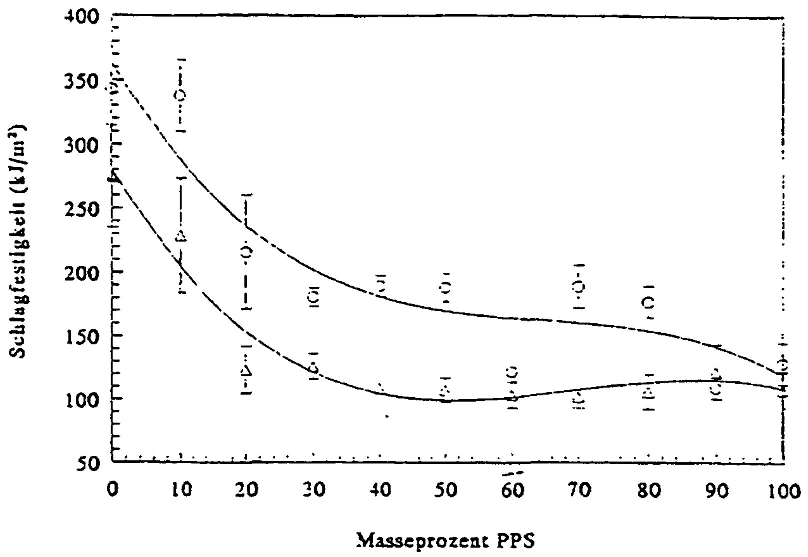


Abbildung 1: Schlagzähigkeiten der unkompatibilisierten/kompatibilisierten Blends

— unkompatibilisiert ······kompatibilisiert mit 5% Copolymer

In der Morphologie der kompatibilisierten Blends wurden deutliche rauhere Phasengrenzflächen und kleinere Domänen gefunden. Das erklärt die kompatibilisierende Wirkung der Copolymere. In folgender Abbildung 2 sind REM Aufnahmen für PPS/Vectra® 80/20-Blends dargestellt. Das linke Bild ist das unkompatibilisierte Blend und das rechte Bild das kompatibilisierte Blend bei gleicher Vergrößerung.

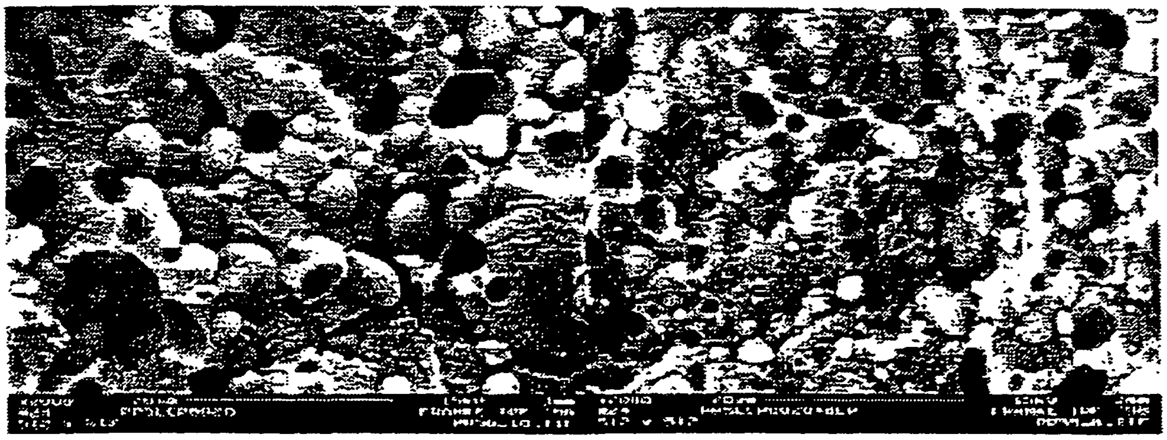

PPS/Vectra® 80/20 unkompatibilisiert PPS/Vectra® 80/20 kompatibilisiert

Abbildung 2: REM Aufnahmen von Blends

Die folgenden Beispiele dienen der Erläuterung der Erfindung.

Beispiel 1 (Vergleichsbeispiel):

Für die Herstellung des unkompatibilisierten Blends werden PPS (Fortron®) und Vectra® A950 im Brabender Plasticorder bei 300 °C und einer Drehzahl von 80 $min^{-1}$ entsprechend der Zusammensetzung in Tabelle 1 (Blend0-Blend10) geknetet. Nach einer Knetzeit von 15 Minuten ist der Blend weitgehend homogenisiert.

Beispiel 2:

a) Herstellung des Segments A:

Die Synthese des flüssigkristallinen Polyesters (Segment A) wird in einem 500 ml Dreihalskolben mit Rührer, N2-Gaseinleitung und Rückflußkühler durchgeführt. In den Kolben werden die Ausgangsstoffe p-Hydroxybenzoesäure und 2,6-Hydroxynaphthoesäure in äquimolarem Verhältnis, 5 mol% Diphenyldiacetat (DPDA) als Molmassenregler und Essigsäureanhydrid im 10%igen Überschuß, bezogen auf die Hydroxygruppen, vorgelegt. Anschließend wird das Reaktionsgemisch drei mal evakuiert und jedes mal mit Stickstoff gespült. Die Reaktion startet mit dem Eintauchen des Glaskolbens im Metallbad. Das Reaktionsgemisch wird für zwei Stunden bei 140 °C, dem Siedepunkt des Essigsäureanhydrids, unter N2-Spülung gerührt. Die Ausgangsstoffe gehen dabei in Lösung. Die Reaktionsmischung ist klar und gelb. Danach wird die Temperatur innerhalb einer Stunde langsam auf 260 °C hochgeregelt. Dabei destilliert Essigsäure und das überschüssige Essigsäureanhydrid ab. Zurück bleibt eine hellgelbe Schmelze. Nach einer weiteren Stunde wird für zwei Stunden die Kondensation unter Vakuum fortgesetzt. Eine halbe Stunde vor dem Ende der Reaktion wird die Temperatur auf 280 °C hochgeregelt. Die anfangs leicht gelbliche Schmelze nimmt über den ganzen Reaktionszeitraum langsam eine helle, goldtönende Farbe an.

b) Herstellung des Segments B:

Die Herstellung von Polyphenylensulfid mit Carbonsäureendgruppen (Segment B) erfolgt in einem 2-l Titanautoklav. Als Ausgangsstoffe werden 1 mol p-Dichlorbenzol und 1,05 mol Natriumsulfid Trihydrat und als Lösungsmittel 1,2 l N-Methylpyrollidon eingesetzt. Zu Beginn der Reaktion wird der Autoklav eine halbe Stunde lang mit Stickstoff gespült, um Sauerstoffreste zu entfernen. Unter Rühren und einer Reaktionstemperatur von 250 °C, steigt der Druck innerhalb der Reaktionszeit von sechs Stunden auf 8 bis 10 bar. Nach dem ersten Schritt des Kettenaufbaus, wird im erkalteten Autoklaven das PPS-Oligomer mit 0,15 mol p-Chlorbenzoesäure zur Modifikation der Endgruppen und 5 mmol Triphenylphosphin zur Reduktion der Disulfidbindungen umgesetzt. Unter Inertgas wird die Reaktion mit den selben Reaktionsparametern für weitere vier Stunden durchgeführt. Dabei stellt sich ein Druck von 10 bis 12 bar ein. Nach dem Abkühlen des Autoklaven wird der Autoklaveninhalt in 2 l eines Gemisches aus halbkonzentrierter Salzsäure und Eis gegossen. Das erhaltene Produkt setzt sich als weißes, voluminöses Pulver in einer gelblichen Lösung ab. Das Produkt wird mit zwei Litern destilliertem Wasser und zwei Liter Methanol gewaschen. Nach dem Abfiltrieren des

Feststoffes wird das Oligomer bei 120 °C im Vakuumtrockenschrank acht Stunden lang getrocknet. Die Ausbeute dieser Reaktion liegt bei 92,5 %.

c) Herstellung des erfindungsgemäßen Copolymers:

Zur Synthese des Copolymers werden die Segmente A (carbonsäureterminiertes PPS, hergestellt nach Beispiel 2.a) und die Segmente B (acetoxyterminiertes Poly(4-oxybenzoat-co-2,6-oxynaphthoat), hergestellt nach Beispiel 2.b), im Brabender Plasticorder bei einer Temperatur von 300 °C, über einen Zeitraum von drei Stunden geknetet. Beide Oligomere haben eine Molmasse Mn von 2500 g/mol und werden äquimolar eingesetzt. Die Kondensationsreaktion wird durch Anlegen von Vakuum gefördet. In den ersten 45 Minuten ist keine Änderung des Drehmomentes zu beobachten. Im Verlauf der restlichen Reaktionszeit von 135 Minuten, steigt das Drehmoment kontinuierlich von 0 auf durchschnittlich 4 Nm an. Der Umsatz der Reaktion wird über die Menge an kondensierter Essigsäure bestimmt und beträgt nach drei Stunden nahezu 100%.

d) Herstellung des kompatibilisierten Blends:

Für die Herstellung des kompatibilisierten Blends werden PPS (Fortron®) und Vectra® A950 im Brabender Plasticorder bei 300 °C in der Zusammensetzung nach Tabelle 1 gemischt (Blend11-Blend21). Die Angaben in Gew.-% sind relative Angaben und beziehen sich nur auf das Gemisch der Blendkomponenten PPS (Fortron®) und Vectra® A950. Nach vollständigem Aufschmelzen der Blendkomponenten werden 5 Gew.-% des kompatibilisierenden Copolymers nach Beispiel 2.c) - bezogen auf den unkompatibilisierten Blend - hinzugesetzt. Nach einer Knetzeit von 15 Minuten liegt der kompatibilisierte Blend vor.

Die mechanischen Tests wurden an Spritzgußkörpern (S2-Stab Typ: 53504) nach der Vorschrift DIN 53448 mit einem Pendelschlagwerk Psd 50/15 vorgenommen.

Tabelle 1:

| Zusammensetzungen und Schlagfestigkeiten der Blends | | | | | |
|---|---|---|---|---|---|
| | | Beispiel 1 (Vgl.) | | Beispiel 2 | |
| (Fortron®) [Gew.-%] | Vectra® A950 [Gew.-%] | Blendbezeichnung | Schlagfestigkeit [$KJ/m^2$] | Blendbezeichnung | Schlagfestigkeit [$KJ/m^2$] |
| 0 | 100 | Blend0 | 274.8 | Blend11 | 342.9 |
| 10 | 90 | Blend1 | 228.7 | Blend12 | 338.0 |
| 20 | 80 | Blend2 | 123.3 | Blend13 | 216.0 |
| 30 | 70 | Blend3 | 125.7 | Blend14 | 180.2 |
| 40 | 60 | Blend4 | 108.3 | Blend15 | 189.0 |
| 50 | 50 | Blend5 | 107.3 | Blend16 | 188.0 |
| 60 | 40 | Blend6 | 103.5 | Blend17 | 122.9 |
| 70 | 30 | Blend7 | 102.1 | Blend18 | 189.0 |
| 80 | 20 | Blend8 | 106.2 | Blend19 | 177.1 |
| 90 | 10 | Blend9 | 109.1 | Blend20 | 122.3 |
| 100 | 0 | Blend10 | 108.2 | Blend21 | 129.1 |

## Patentansprüche

**1.** Copolymer, enthaltend

a) ein Segment A mit einer zahlenmittleren Molmasse Mn zwischen 1.000 und 20.000 g/mol, das

i) Einheiten 1, die von Strukturen der Formel (I)

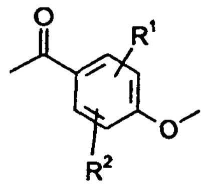

(I)

abgeleitet sind, wobei die Reste $R^1$ und $R^2$ unabhängig voneinander ein Wasserstoff-, Fluor- Chlor oder Bromatom oder einen verzweigten oder unverzweigten Alkyl- oder Alkoxyrest mit 1 bis 6 Kohlenstoffatomen darstellen; und/oder

ii) Einheiten 2, die von Strukturen der Formel (II)

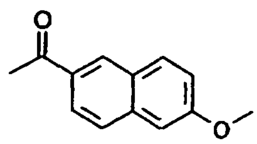

(II)

abgeleitet sind

aufweist; und

b) ein Segment B, abgeleitet von einer Polarylensulfid-Struktur der Formel (IV)

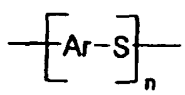

. (IV)

wobei Ar einen aromatischen oder mehrere kondensierte, aromatische Reste und n eine Zahl zwischen 2 und 100, insbesondere zwischen 5 und 20, darstellt,

**dadurch gekennzeichnet, dass** die Segmente A und B über Esterbrücken verknüpft sind und ein Blockcopolymer bilden .

2. Copolymer nach Anspruch 1, **dadurch gekennzeichnet, daß** die Segmente A und B alternierend angeordnet sind.

3. Copolymer nach Anspruch 1 oder 2, bestehend aus der festen Segmentabfolge A-B-A.

4. Copolymer nach einem der vorherigen Ansprüche , **dadurch gekennzeichnet, daß** Ar einen Phenylen- oder Naphthylenrest darstellt.

5. Copolymer nach einem der vorherigen Ansprüche, **dadurch gekennzeichnet, daß** das Segment B von Poly(m-thiophenylen), Poly(o-thiophenylen), insbesondere von Poly(p-thiophenylen), abgeleitet ist.

6. Copolymer nach einem der vorherigen Ansprüche, **dadurch gekennzeichnet, daß** die zahlenmittleren Molmasse Mn zwischen 2.000 und 10.000 g/mol beträgt.

7. Copolymer nach einem der Ansprüche 1 bis 6, **dadurch gekennzeichnet, daß** das Segment A sowohl Einheiten 1 als auch Einheiten 2 aufweist.

8. Copolymer nach einem der Ansprüche 1 bis 6, **dadurch gekennzeichnet, daß** die Einheiten 1 und 2 im Segment A in statistischer Verteilung angeordnet sind.

9. Copolymer nach einem der Ansprüche 1 bis 6, **dadurch gekennzeichnet, daß** die Einheiten 1 und 2 im Segment

A in alternierender Reihenfolge angeordnet sind.

**10.** Copolymer nach einem der vorherigen Ansprüche, **dadurch gekennzeichnet, daß** das molare Verhältnis von Einheiten 1 zu Einheiten 2 im Segment A zwischen 1:9 und 9:1 liegt.

**11.** Copolymer nach einem der vorherigen Ansprüche, **dadurch gekennzeichnet, daß** das Segment A zusätzlich 0,5 bis 10 mol% Einheiten 3 aufweist, die von Strukturen der Formel (III)

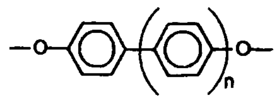

**(III)**

abgeleitet sind, wobei n die Zahl 0 oder 1 darstellt.

**12.** Copolymer nach einem der vorherigen Ansprüche, **dadurch gekennzeichnet, daß** der Anteil an Segment A zwischen 5 und 95 Gew.-% beträgt.

**13.** Verfahren zur Herstellung eines Copolymers nach einem der vorherigen Ansprüche, **dadurch gekennzeichnet, daß** man ein acetoxygruppenterminiertes Segment A mit einem carboxylgruppenterminierten Segment B in Schmelze miteinander reagieren läßt.

**14.** Verwendung eines Copolymers nach einem der Ansprüche 1 bis 13 zur Kompatibilisierung von Blends aus einem Polyarylensulfid und einem flüssigkristallinen Polyester.

**15.** Verwendung nach Anspruch 14, **dadurch gekennzeichnet, daß** der Blend mindestens 50 Gew.-% Polyarylensulfid enthält.

**Claims**

**1.** A copolymer comprising

a) a segment A with a number-average molar mass Mn of from 1000 to 20,000 g/mol, which has

i) units 1, which have been derived from structures of the formula (I)

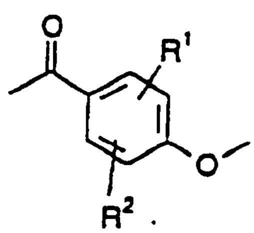

**(I)** ,

where the radicals $R^1$ and $R^2$, independently of one another, are a hydrogen, fluorine, chlorine or bromine atom or a branched or unbranched alkyl or alkoxy radical having from 1 to 6 carbon atoms; and/or
ii) units 2, which are derived from structures of the formula (II)

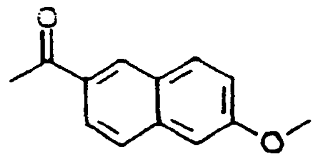 (II) ;

and

b) a segment B, derived from a polyarylene sulfide structure of the formula (IV)

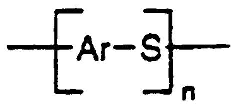 (IV) ,

where Ar is an aromatic radical, or more than one condensed aromatic radicals, and n is a number from 2 to 100, in particular from 5 to 20, wherein the segments A and B have been linked via ester bridges and from a block copolymer.

**2.** A copolymer as claimed in claim 1, wherein the segments A and B are arranged so that they alternate.

**3.** A copolymer as claimed in claim 1 or 2, and composed of the fixed sequence of segments A-B-A.

**4.** A copolymer as claimed in any one of the preceding claims, wherein Ar is a phenylene or naphthylene radical.

**5.** A copolymer as claimed in any one of the preceding claims, wherein the segment B has been derived from poly (m-thiophenytene) or poly(o-thiophenylene), and in particular from poly(p-thiophenylene).

**6.** A copolymer as claimed in any one of the preceding claims, wherein the number-average molar mass Mn is from 2000 to 10,000 g/mol.

**7.** A copolymer as claimed in any one of claims 1 to 6, wherein the segment A has both units 1 and units 2.

**8.** A copolymer as claimed in any one of claims 1 to 6, wherein the units 1 and 2 in the segment A are arranged with random distribution.

**9.** A copolymer as claimed in any one of claims 1 to 6, wherein the units 1 and 2 in the segment A are arranged in alternating sequence.

**10.** A copolymer as claimed in any one of the preceding claims, wherein the molar ratio of units 1 to units 2 in the segment A is from 1: 9 to 9:1.

**11.** A copolymer as claimed in any one of the preceding claims, wherein the segment A also has from 0.5 to 10 mol% of units 3, which have been derived from structures of the formula (III)

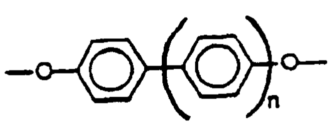 (III) ,

where n is the number 0 or 1.

**12.** A copolymer as claimed in any one of the preceding claims, wherein the proportion of segment A is from 5 to 95% by weight.

13. A process for preparing a copolymer as claimed in any one of the preceding claims, which comprises allowing an acetoxy-group-terminated segment A and a carboxyl-group-terminated segment B to react with one another in the melt.

14. The use of a copolymer as claimed in any one of claims 1 to 13 for compatibilizing blends made from a polyarylene sulfide and a liquid-crystalline polyester.

15. The use as claimed in claim 14, wherein the blend comprises at least 50% by weight of polyarylene sulfide.

**Revendications**

1. Copolymère contenant

a) un segment A ayant une masse moléculaire moyenne en nombre Mn comprise entre 1 000 et 20 000 g/mole, qui comporte

i) des motifs 1 qui sont dérivés de structures de formule (I)

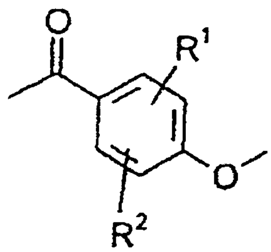

(I)

les radicaux $R^1$ et $R^2$ représentant, indépendamment les uns des autres, un atome d'hydrogène, de fluor, de chlore ou de brome, ou un radical alkyle ou alcoxy ramifié ou non ramifié ayant de 1 à 6 atomes de carbone ; et/ou

ii) des motifs 2 qui sont dérivés de structures de formule (II)

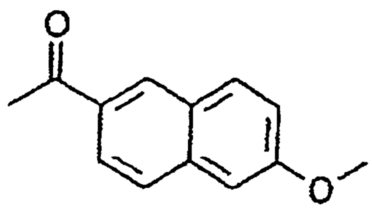

(II)

et

b) un segment B dérivé d'une structure poly(sulfure d'arylène) de formule (IV)

$$-\left[Ar-S\right]_n- \quad . \quad (IV)$$

dans laquelle Ar représente un radical aromatique ou plusieurs radicaux aromatiques condensés et n représente un nombre compris entre 2 et 100, en particulier entre 5 et 20,

**caractérisé en ce que** les segments A et B sont reliés par des ponts esters et forment un copolymère séquencé.

**2.** Copolymère selon la revendication 1, **caractérisé en ce que** les segments A et B sont disposés en alternance.

**3.** Copolymère selon la revendication 1 ou 2, constitué de la succession fixe de segments A-B-A.

**4.** Copolymère selon l'une quelconque des revendications précédentes, **caractérisé en ce que** Ar représente un radical phénylène ou naphtylène.

**5.** Copolymère selon l'une quelconque des revendications précédentes, **caractérisé en ce que** le segment B est dérivé de poly(m-thiophénylène), poly(o-thiophénylène), en particulier de poly(p-thiophénylène).

**6.** Copolymère selon l'une quelconque des revendications précédentes, **caractérisé en ce que** la masse moléculaire moyenne en nombre Mn est comprise entre 2 000 et 10 000 g/mole.

**7.** Copolymère selon l'une quelconque des revendications 1 à 6, **caractérisé en ce que** le segment A comporte aussi bien des motifs 1 que des motifs 2.

**8.** Copolymère selon l'une quelconque des revendications 1 à 6, **caractérisé en ce que** les motifs 1 et 2 dans le segment A sont disposés en en distribution statistique.

**9.** Copolymère selon l'une quelconque des revendications 1 à 6, **caractérisé en ce que** les motifs 1 et 2 dans le segment A sont disposés en une succession alternée.

**10.** Copolymère selon l'une quelconque des revendications précédentes, **caractérisé en ce que** le rapport molaire des motifs 1 aux motifs 2 dans le segment A est compris entre 1:9 et 9:1.

**11.** Copolymère selon l'une quelconque des revendications précédentes, **caractérisé en ce que** le segment A comporte additionnellement 0,5 à 10 % en moles de motifs 3 qui sont dérivés de structures de formule (III)

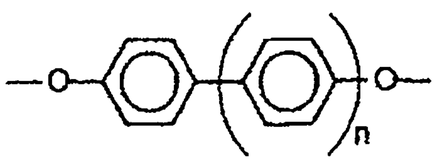

(III)

dans laquelle n représente le nombre 0 ou 1.

**12.** Copolymère selon l'une quelconque des revendications précédentes, **caractérisé en ce que** la proportion du segment A est comprise entre 5 et 95 % en poids.

**13.** Procédé pour la préparation d'un copolymère selon l'une quelconque des revendications précédentes, **caractérisé en ce qu'**on fait réagir l'un avec l'autre, en masse fondue, un segment A terminé par un groupe acétoxy avec un segment B terminé par un groupe carboxy.

**14.** Utilisation d'un copolymère selon l'une quelconque des revendications 1 à 13, pour conférer la compatibilité à des alliages d'un poly(sulfure d'arylène) et d'un polyester de type cristal liquide.

**15.** Utilisation selon la revendication 14, **caractérisée en ce que** l'alliage contient au moins 50 % en poids de poly (sulfure d'arylène).

Anlage I